# EUROPEAN PATENT APPLICATION

(11) **EP 3 031 671 A1**
(43) Date of publication of application: **15.06.2016**
(21) Application number: 14834088.8
(22) Date of filing: 18.07.2014
(51) Int. Cl.: B60R 16/02, B60S 1/02

(54) **STRUCTURE FOR ROUTING POWER SUPPLY CABLES TO ELECTRICALLY HEATED WIRE TERMINALS**

(30) Priority: 07.08.2013 JP 2013163994
(71) Applicant: Sumitomo Wiring Systems, Ltd., Yokkaichi-shi, Mie 510-8503 (JP)
(72) Inventor: IWATA, Makoto, Yokkaichi-shi Mie 510-8503 (JP)
(74) Representative: Müller-Boré & Partner Patentanwälte PartG mbB
(86) International application number: PCT/JP2014/069182
(87) International publication number: WO 2015/019832

(57) **Abstract**

It is aimed to provide a novel power supply cable routing structure to heating wire terminals capable of space-efficiently routing power supply cables to a plurality of heating wire terminals provided to project on a window glass of a vehicle. A plurality of heating wire terminals 20a, 20b connected to a heating wire 16 laid in a window glass 14 of a vehicle are so aligned and arranged that connecting portions 24a, 24b have the same projection direction and are separated from each other in the projection direction, whereas power supply cables 26a, 26b are connected to the respective heating wire terminals 20a, 20b and drawn out in the projection direction of the connecting portions 24a, 24b and an interference regulating member 34 is mounted on a part of the power supply cable 26a connected to the connecting portion 24a of one heating wire terminal 20a and extending while passing the other heating wire terminal 20b, thereby avoiding contact with an externally exposed part 32 of the other heating wire terminal 20b.

## Description

### Technical Field

The present invention relates to a power supply cable routing structure to heating wire terminals connected to a heating wire laid in a window glass of a vehicle and projecting on the window glass.

### Background Art

Conventionally, a heating wire for the defogging of an inner surface, the defrosting of an outer surface and the like is laid in a window glass of a vehicle such as an automotive vehicle and a heating wire terminal connected to the heating wire is provided to project on a surface of the window glass to make an external power supply cable connectable to such a heating wire.

Such a heating wire terminal is composed of a base end part connected to a heating wire and a connecting portion projecting obliquely upwardly from such a base end part to prevent the interference of a connection terminal provided on an end of the power supply cable and the window glass when the connection terminal is connected to the connecting portion of the heating wire terminal, for example, as shown in FIG. 7 of Japanese Unexamined Patent Publication No. H07-132781 (patent literature 1). Specifically, the vicinity of the base end part of the heating wire terminal is exposed to outside even if the connection terminal of the power supply cable is connected to the connecting portion of the heating wire terminal.

If a plurality of heating wire terminals are provided to project on the window glass, the power supply cable connected to one heating wire terminal may interfere with the other heating wire terminal, particularly with the vicinity of the base end part exposed to outside. If the power supply cable interferes with the base end part exposed to outside, a sheath of the power supply cable made of resin may be abraded against the heating wire terminal made of metal to be broken, whereby a core of the power supply cable and the heating wire terminal may directly come into contact to cause breakage due to intermittent vibration of the vehicle. Accordingly, as described, for example, in Japanese Unexamined Patent Publication No. 2006-232072 (patent literature 2), the interference of the power supply cable connected to one heating wire terminal and the other heating wire terminal is avoided by maximally separating arrangement positions of the heating wire terminals or making wiring directions of the power supply cables different.

However, if the arrangement positions of the heating wire terminals are maximally separated or the wiring directions of the power supply cables are made different as described in patent literature 2, the enlargement of a space necessary to route the power supply cables to the heating wire terminals is unavoidable. Thus, it has been difficult to call the above structure a routing structure capable of sufficiently meeting a request for space saving of recent years.

### Citation List

### Patent Literature

Patent literature 1: Japanese Unexamined Patent Publication No. H07-132781
Patent literature 2: Japanese Unexamined Patent Publication No. 2006-232072

### Summary of the Invention

### Technical Problem

The present invention was developed against the above situation and aims to provide a novel power supply cable routing structure to heating wire terminals capable of space-efficiently routing power supply cables to a plurality of heating wire terminals provided to project on a window glass of a vehicle.

### Solution to Problem

A first aspect of the present invention is directed to a power supply cable routing structure to heating wire terminals each including a base end part to be connected to a heating wire laid in a window glass of a vehicle and a connecting portion projecting from the base end part, characterized in that a plurality of the heating wire terminals are aligned and arranged in a state where the connecting portions thereof have the same projection direction and are separated from each other in the projection direction, a connection terminal provided on an end of a power supply cable is connected to each of the heating wire terminals and the power supply cable is drawn out in the projection direction of the connecting portion, and an interference regulating member is mounted on a part of the power supply cable connected to the connecting portion of one of the heating wire terminals and extending while passing the other heating wire terminal, thereby avoiding contact with an externally exposed part of the other heating wire terminal.

In the present invention, the plurality of heating wire terminals projecting on the window glass of the vehicle are so aligned and arranged in the projection direction that the connecting portions thereof have the same projection direction. Thus, the power supply cables respectively connected to these heating wire terminals can be routed in the same direction and connected. As a result, the power supply cables can be space-efficiently routed to the plurality of heating wire terminals.

If the power supply cables are drawn out in the same direction from the plurality of aligned and arranged heating wire terminals, the power supply cable connected to the heating wire terminal located in front in an alignment direction extends while passing the heating wire terminal located behind in the alignment direction. At that time, since the vicinity of the base end part of the connecting portion of the heating wire terminal projecting from the window glass is exposed to outside, there is a possibility of interference with the power supply cable. In this respect, according to the present invention, contact with the externally exposed part of the heating wire terminal is avoided by mounting the interference regulating member on the part of the power supply cable extending while passing the other heating wire terminal. Thus, the power supply cables can be space-efficiency routed while the problem of the interference of the heating wire terminal and the power supply cable is advantageously avoided.

According to a second aspect of the present invention, in the power supply cable routing structure according to the first aspect, the interference regulating member is formed of a member having a higher rigidity than the power supply cable.

According to this aspect, the interference regulating member can be provided by a simple structure by fixing a member having a higher rigidity than the power supply cable, e.g. made of synthetic resin to the part of the power supply cable extending while passing the other heating wire terminal with a vinyl tape or the like, wherefore production cost can be reduced.

According to a third aspect of the present invention, in the power supply cable routing structure according to the first or second aspect, the connection terminal provided on the end of the power supply cable is accommodated in a connector housing and the interference regulating member is fixed to the connector housing of the power supply cable connected to the other heating wire terminal.

According to this aspect, the interference regulating member of the power supply cable can be fixed, skillfully using the connector housing for accommodating the connection terminal provided on the end of the power supply cable. This can further reliably and stably prevent the problem of the interference of the externally exposed part of the heating wire terminal and the power supply cable.

Note that a fixing means may be anything provided that it can fix the interference regulating member to the connector housing. For example, the interference regulating member may be fixed to the connector housing using a vinyl tape, the interference regulating member may be fixed to the connector housing by adhesion or an engaging recess or projection may be provided on the connector housing and engaged with a projection or recess provided on the interference regulating member to fix the interference regulating member and the connector housing.

### Effects of the Invention

In the present invention, the plurality of heating wire terminals are so configured that the connecting portions thereof have the same projection direction and aligned and arranged in the projection direction of the connecting portions, and the interference regulating member is mounted on the part of the power supply cable connected to the heating wire terminal and extending while passing the other heating wire terminal. In this way, the plurality of heating wire terminals can be drawn out in the same direction and space-efficiently routed while the interference of the power supply cable and the heating wire terminal is avoided.

### Brief Description of the Drawings

FIG. 1 is a front view of an essential part of a rear window with a power supply cable routing structure to heating wire terminals as a first embodiment of the present invention,
FIG. 2 is an enlarged view of the power supply cable routing structure to the heating wire terminals shown in FIG. 1,
FIG. 3 is a top view of the power supply cable routing structure to the heating wire terminals shown in FIG. 2, and
FIG. 4 is an enlarged view of a power supply cable routing to heating wire terminals as a second embodiment of the present invention.

### Embodiments of the Invention

Hereinafter, embodiments of the present invention are described with reference to the drawings.

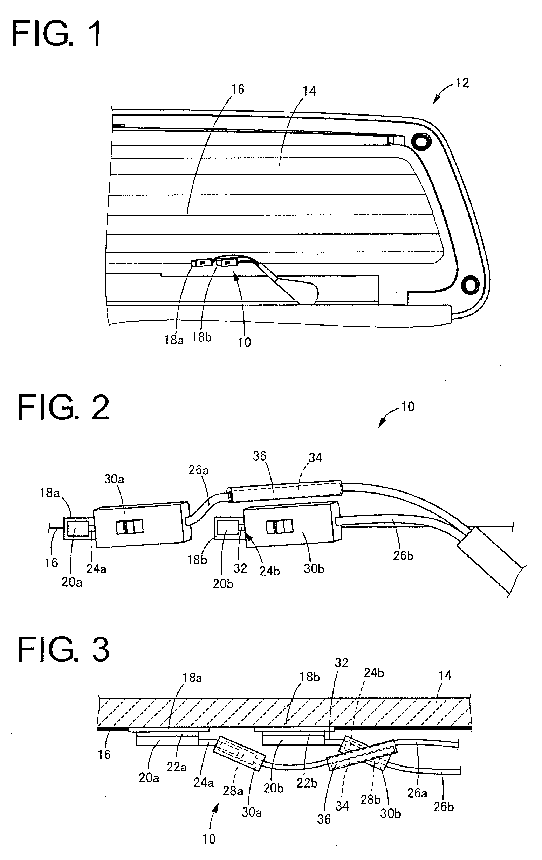

First, FIG. 1 shows an essential part on a vehicle interior side of a rear window 12 of an automotive vehicle with a power supply cable routing structure 10 to heating wire terminals as a first embodiment of the present invention. The rear window 12 is provided with a rear glass 14 as a window glass of the vehicle. A heating wire 16 is laid in the rear glass as conventionally known.

The heating wire 16 is provided with strip-like thin film electrode portions 18a, 18b having a predetermined width and the power supply cable routing structure 10 of the present invention is provided in a part where the thin film electrode portions 18a,18b are formed. The power supply cable routing structure 10 is enlargedly shown in FIGS. 2 and 3. The thin film electrode portions 18a, 18b are respectively provided with heating wire terminals 20a, 20b made of metal.

Each of the heating wire terminals 20a, 20b includes a plate-like base end part 22a, 22b and a connecting portion 24a, 24b projecting in an oblique direction from the base end part 22a, 22b. The base end part 22a, 22b is fixed to the thin film electrode portion 18a, 18b such as by soldering to be electrically connected. By fixing the base end part 22a, 22b to the thin film electrode portion 18a, 18b, the connecting portion 24a, 24b projects obliquely upwardly relative to the rear glass 14. The heating wire terminals 20a, 20b are so fixed to the thin film electrode portions 18a, 18b that the connecting portions 24a, 24b thereof have the same projection direction and are aligned and arranged in a state separated from each other in the projection direction of the connecting portions 24a, 24b.

Power supply cables 26a, 26b connected to a battery are respectively connected to the heating wire terminals 20a, 20b. Connection terminals 28a, 28b made of metal are respectively provided on ends of the power supply cables 26a, 26b. The connection terminals 28a, 28b are respectively accommodated in connector housings 30a, 30b made of resin and having a rectangular block shape. The connection terminal 28a of the power supply cable 26a is connected to the connecting portion 24a of the heating wire terminal 20a by mounting the connector housing 30a on the heating wire terminal 20a, whereas the connection terminal 28b of the power supply cable 26b is connected to the connecting portion 24b of the heating wire terminal 20b by mounting the connector housing 30b on the heating wire terminal 20b. These power supply cables 26a, 26b are drawn out in the projection direction (rightward direction in FIGS. 2 and 3) of the connecting portions 24a, 24b of the heating wire terminals 20a, 20b.

By drawing out the power supply cables 26a, 26b in the same direction, the power supply cable 26a connected to the connecting portion 24a of one heating wire terminal 20a passes vertically above the other heating wire terminal 20b and extends vertically above an externally exposed part 32 not covered by the connector housing 30b at a base end part of the connecting portion 24b of the heating wire terminal 20b.

An interference regulating member 34 is mounted on a part of the power supply cable 26a extending while passing the heating wire terminal 20b. The interference regulating member 34 is a member having a bar shape extending straight while having a circular cross-section, formed of, for example, synthetic resin and having a higher rigidity than the power supply cable 26a. Such an interference regulating member 34 is placed on a sheath of the part of the power supply cable 26a passing the heating wire terminal 20b and mounted by being wound with a tape 36. In this way, the deflection and deformation of the part of the power supply cable 26a extending while passing the heating wire terminal 20b is hindered by the interference regulating member 34 to avoid the contact of the power supply cable 26a and the exposed part 32.

In the power supply cable routing structure 10 according to this embodiment, the heating wire terminals 20a, 20b provided on the heating wire 16 are so arranged that the connecting portions 24a, 24b thereof project in the same direction. In this way, the power supply cables 26a, 26b connected to the respective heating wire terminals 20a, 20b are drawn out in the same direction. This enables the power supply cables 26a, 26b to be space-efficiently routed.

By drawing out the power supply cables 26a, 26b in the same direction, one power supply cable 26a passes vertically above the other heating wire terminal 20b. Thus, there is a possibility of interference with the externally exposed part 32 of the heating wire terminal 20b. However, according to the present invention, the interference regulating member 34 is mounted on the part of the power supply cable 26a passing the heating wire terminal 20b to prevent deflection and deformation. This makes it possible to prevent the interference of the power supply cable 26a and the externally exposed part 32 of the heating wire terminal 20b while space-efficiently routing the power supply cables 26a, 26b and avoid a possibility of the breakage of the power supply cable 26a and the like induced due to interference. The interference of the heating wire terminal 20b and the power supply cable 26a can be cost-efficiently avoided without requiring large-scale equipment by a simple structure of fitting the interference regulating member 32, which is a bar-like member formed of synthetic resin, on the sheath of the power supply cable 26a and winding the tape 36 to fix the interference regulating member 34.

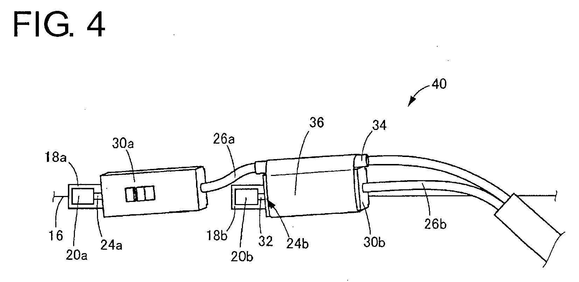

Next, a power supply cable routing structure 40 to heating wire terminals as a second embodiment of the present invention is shown in FIG. 4. Note that, in the following description, members and parts structured similarly to the first embodiment are denoted by the same reference signs as in the first embodiment in FIG. 4 and not described.

In this embodiment, an interference regulating member 34 is fixed to a connector housing 30b of a power supply cable 26b connected to another heating wire terminal 20b by a tape 36 as a fixing means. This hinders the deflection and deformation of a part of a power supply cable 26a passing the heating wire terminal 20b and prevents interference with an externally exposed part 32 of the heating wire terminal 20b. By doing so, the interference of the power supply cable 26a and the heating wire terminal 20b can be more reliably prevented by fixing the interference regulating member 34 to the connector housing 30b connected to the heating wire terminal 20b. Note that the fixing means for fixing the interference regulating member 34 to the connector housing 30b is not limited to the tape 36. For example, the interference regulating member 34 may be fixed to the connector housing 30b by adhesion or an engaging recess or projection may be provided on the connector housing 30b and engaged with a projection or recess provided on the interference regulating member 34 to fix the interference regulating member 34.

Although the embodiments of the present invention have been described in detail above, the present invention is not limited to the specific description thereof. For example, the number of the heating wire terminals is not limited and three or more heating wire terminals may be so aligned and arranged that connecting portions thereof project in the same direction and interference regulating members may be provided on a plurality of parts of each power supply cable connected to the corresponding heating wire terminal passing the other heating wire terminals.

Further, the specific shape of the interference regulating member is also not limited to the shape as described in the above embodiments. For example, it is possible to adopt an interference regulating member having a rectangular cross-section, a U-shaped cross-sectional shape to be externally fitted on the power supply cable, a tubular shape to be externally fitted on the power supply cable or the like. Furthermore, the interference regulating member is not necessarily limited to the one having a linear shape and may be formed into a bent shape such as to hold the power supply cable in a bent shape in consideration of a routing space around the part of the power supply cable passing the other heating wire terminal and the like. Further, in the above embodiments, tape winding is performed after the solid and bar-like interference regulating member 34 is placed on the sheath of the power supply cable 26a. However, the interference regulating member may be, for example, formed into a hollow half body obtained by dividing a tubular shape in a circumferential direction over the entire length and such an interference regulating member may be fixed by being wound together with the power supply cable with a tape after being mounted on the power supply cable.

### LIST OF REFERENCE SIGNS

10, 40: power supply cable routing structure to heating wire terminals, 12: rear window, 14: rear glass (window glass of vehicle), 16: heating wire, 18: thin film electrode portion, 20: heating wire terminal, 22: base end part, 24: connecting portion, 26a, 26b: power supply cable, 28: connection terminal, 30: connector housing, 32: externally exposed part, 34: interference regulating member, 36: tape

## Claims

1. A power supply cable routing structure to heating wire terminals each including a base end part to be connected to a heating wire laid in a window glass of a vehicle and a connecting portion projecting from the base end part, **characterized in that**:
a plurality of the heating wire terminals are aligned and arranged in a state where the connecting portions thereof have the same projection direction and are separated from each other in the projection direction;
a connection terminal provided on an end of a power supply cable is connected to each of the heating wire terminals and the power supply cable is drawn out in the projection direction of the connecting portion; and
an interference regulating member is mounted on a part of the power supply cable connected to the connecting portion of one of the heating wire terminals and extending while passing the other heating wire terminal, thereby avoiding contact with an externally exposed part of the other heating wire terminal.

2. A power supply cable routing structure to heating wire terminals according to claim 1, wherein the interference regulating member is formed of a member having a higher rigidity than the power supply cable.

3. A power supply cable routing structure to heating wire terminals according to claim 1 or 2, wherein the connection terminal provided on the end of the power supply cable is accommodated in a connector housing and the interference regulating member is fixed to the connector housing of the power supply cable connected to the other heating wire terminal.
